# EUROPEAN PATENT APPLICATION

(11) **EP 3 220 272 A1**
(43) Date of publication of application: **20.09.2017**
(21) Application number: 16177216.5
(22) Date of filing: 30.06.2016
(51) Int. Cl.: G06F 11/36

(54) **A METHOD AND SYSTEM FOR PERFORMING REGRESSION INTEGRATION TESTING**

(30) Priority: 15.03.2016 US 201615070406
(71) Applicant: Wipro Limited, 560 035 Karnataka (IN)
(72) Inventor: ALEX, Jiji, Beaverton, OR (US)
(74) Representative: Finnegan Europe LLP

(57) **Abstract**

The present disclosure relates to a method and system for performing regression integration testing. The method comprises selecting a pattern template, wherein the selected pattern template is represented as a service pattern template. The method also selects a test suite and a test environment to be used for testing the service pattern template. Further, each test case in the test suite is executed on the selected test environment and results of the execution are stored in a test repository. Upon execution, change in the result of execution, due to at least one of an upgrade and a change in the test environment, is determined through regression testing based on the information stored in the test repository. Further the regression integration testing is performed on the service pattern template for validating the service pattern template.

## Description

### Technical Field

The present subject matter is related, in general to software testing, and more particularly, but not exclusively to a method and a system for performing regression integration testing.

### Background

Generally, in a software development platform, an application/software is modified and changed constantly as per business goals and needs of an organization. Implementing additional features into the existing enterprise application/software brings in additional issues along with it for which integration testing comes into picture. Integration testing is a type of testing in which individual modules of the enterprise application/software are combined and tested as a group. In order to conduct the integration testing on the application, new test suites have to be created along with new test cases for reflecting the current changes in the application.

However, creating the new test suites and testing the new test cases in the new test suite is time consuming and cost enduring. Hence, there is a need for a method that could automate or replicate the integration testing of the application program/software by incorporating new changes quickly and efficiently into the existing test suites. Regression testing is one such method, which verifies that an enterprise application/software that was previously developed and tested still performs correctly after it was changed or interfaced with other applications/software. Regression testing involves running a set of old test cases that were developed for an earlier version of the application against a new version of the application, before the new version of the application is released, to make sure that the earlier capabilities of the application still work.

One of the conventional methods for performing regression integration testing of an enterprise application/software provides a graphical user interface to an automated software development system and a customized software application to the organization. The application comprises a collection of tests that together are configured to perform an integration process. The interface supports testing of an integration process model prior to generating the dynamic runtime engine. However, the method does not allow a tester of the application/software to define an integration pattern corresponding to a system environment used by the tester. Also, the collection of tests used for performing the integration process in the method is not independent of the system in which the tests are run. Hence, there is a need for a method of performing regression integration testing that allows the tester to define and/or select the pattern of integration and the corresponding system environment needed for the testing.

The issues mainly faced in performing regression integration testing includes allowing a user to select an integration pattern and a corresponding test environment and generating plurality of pattern templates corresponding to the selected integration pattern for regression testing of the selected integration pattern, thereby making the plurality of pattern templates to work across any test environment.

### Summary

Disclosed herein is a method and system for performing regression integration testing of an application program/software. A user of the regression testing system is allowed to select one of one or more integration patterns and a corresponding test environment. A plurality of pattern templates, corresponding to the selected integration pattern, are generated in the regression testing system, thereby making the plurality of pattern templates to work across any test environment.

Accordingly, the present disclosure relates to a method of performing regression integration testing. The method comprises selecting, by a regression testing system, a pattern template from one or more pattern templates, wherein each of the one or more pattern templates correspond to one of one or more predefined integration patterns and the selected pattern template is represented as a service pattern template. The regression testing system also selects a test suite and a test environment to be used for testing the service pattern template, wherein the test suite comprises one or more test cases. The method comprises executing each of the one or more test cases in the test suite on the selected test environment, wherein information of the test suite, the test environment and results of the execution of each of the one or more test cases are stored in a test repository. Upon execution, the regression testing system determines a change in the result of the execution of each of the one or more test cases due to at least one of an upgrade and a change in the test environment through regression integration testing based on the information stored in the test repository. Further, the regression testing system performs the regression integration testing on the service pattern template for validating the service pattern template based on the information stored in the test repository.

Further the present disclosure relates to a method of performing regression integration testing, the method comprising: selecting, by a regression testing system, a pattern template from one or more pattern templates, wherein each of the one or more pattern templates correspond to one of one or more predefined integration patterns, wherein the selected pattern template is represented as a service pattern template; selecting, by the regression testing system, a test suite and a test environment to be used for testing the service pattern template, wherein the test suite comprises one or more test cases; executing, by the regression testing system, each of the one or more test cases in the test suite on the selected test environment, wherein information of the test suite, the test environment and results of the execution of each of the one or more test cases are stored in a test repository; determining, by the regression testing system, a change in the result of the execution of each of the one or more test cases due to at least one of an upgrade and a change in the test environment through regression testing based on the information stored in the test repository; and performing, by the regression testing system, the regression integration testing on the service pattern template for validating the service pattern template based on the information stored in the test repository.

Further, the present disclosure relates to a regression testing system for performing integration testing. The system comprises a processor and a memory communicatively coupled to the processor, wherein the memory stores processor-executable instructions, which, on execution, causes the processor to select a pattern template from one or more pattern templates, wherein each of the one or more pattern templates correspond to one of one or more predefined integration patterns and the selected pattern template is represented as a service pattern template. The instructions further cause the processor to select a test suite and a test environment to be used for testing the service pattern template, wherein the test suite comprises one or more test cases. The instructions cause the processor to execute each of the one or more test cases in the test suite on the selected test environment, wherein information of the test suite, the test environment and results of the execution of each of the one or more test cases are stored in a test repository. Further, the regression testing system determines a change in the result of the execution of each of the one or more test cases due to at least one of an upgrade and a change in the test environment through regression integration testing based on the information stored in the test repository. Finally, the regression testing system performs the regression integration testing on the service pattern template for validating the service pattern template based on the information stored in the test repository.

Furthermore, the present disclosure relates to a non-transitory computer readable medium including instructions stored thereon that when processed by at least one processor cause a regression testing system to perform operations comprising selecting a pattern template from one or more pattern templates. Each of the one or more pattern templates correspond to one of one or more predefined integration patterns, wherein the selected pattern template is represented as a service pattern template. The instructions further cause the processor of the regression testing system to select a test suite and a test environment to be used for testing the service pattern template, wherein the test suite comprises one or more test cases. Further, the instructions cause the processor to execute each of the one or more test cases in the test suite on the selected test environment, wherein information of the test suite, the test environment and results of the execution of each of the one or more test cases are stored in a test repository. Upon execution, the instructions cause the processor to determine a change in the result of the execution of each of the one or more test cases due to at least one of an upgrade and a change in the test environment through regression testing based on the information stored in the test repository. Finally, the instructions cause the processor to perform the regression integration testing on the service pattern template for validating the service pattern template based on the information stored in the test repository.

The foregoing summary is illustrative only and is not intended to be in any way limiting. In addition to the illustrative aspects, embodiments, and features described above, further aspects, embodiments, and features will become apparent by reference to the drawings and the following detailed description.

### Brief Description of the Accompanying Drawings

The accompanying drawings, which are incorporated in and constitute a part of this disclosure, illustrate exemplary embodiments and, together with the description, serve to explain the disclosed principles. In the figures, the left-most digit(s) of a reference number identifies the figure in which the reference number first appears. The same numbers are used throughout the figures to reference like features and components. Some embodiments of system and/or methods in accordance with embodiments of the present subject matter are now described, by way of example only, and with reference to the accompanying figures, in which:
**Fig. 1a** shows an exemplary environment illustrating a method of performing regression integration testing in accordance with some embodiments of the present disclosure;
**Fig. 1b** shows a block diagram illustrating a regression testing system in accordance with some embodiments of the present disclosure;
**Fig. 2a** illustrates a flowchart showing a method for generating a test suite in accordance with some embodiments of the present disclosure;
**Fig. 2b** illustrates a flowchart showing a method of executing test suites and test cases in accordance with some exemplary embodiments of the present disclosure;
**Fig. 3** illustrates a flowchart showing a method of performing regression integration testing in accordance with some embodiments of the present disclosure; and
**Fig. 4** illustrates a block diagram of an exemplary computer system for implementing embodiments consistent with the present disclosure.

It should be appreciated by those skilled in the art that any block diagrams herein represent conceptual views of illustrative systems embodying the principles of the present subject matter. Similarly, it will be appreciated that any flow charts, flow diagrams, state transition diagrams, pseudo code, and the like represent various processes which may be substantially represented in computer readable medium and executed by a computer or processor, whether or not such computer or processor is explicitly shown.

### Detailed Description

In the present document, the word "exemplary" is used herein to mean "serving as an example, instance, or illustration." Any embodiment or implementation of the present subject matter described herein as "exemplary" is not necessarily to be construed as preferred or advantageous over other embodiments.

While the disclosure is susceptible to various modifications and alternative forms, specific embodiment thereof has been shown by way of example in the drawings and will be described in detail below. It should be understood, however that it is not intended to limit the disclosure to the particular forms disclosed, but on the contrary, the disclosure is to cover all modifications, equivalents, and alternative falling within the scope of the disclosure.

The terms "comprises", "comprising", or any other variations thereof, are intended to cover a non-exclusive inclusion, such that a setup, device or method that comprises a list of components or steps does not include only those components or steps but may include other components or steps not expressly listed or inherent to such setup or device or method. In other words, one or more elements in a system or apparatus proceeded by "comprises... a" does not, without more constraints, preclude the existence of other elements or additional elements in the system or method.

The present disclosure relates to a method and system for performing regression integration testing. The method comprises selecting, by a regression testing system, a pattern template from one or more pattern templates, wherein each of the one or more pattern templates correspond to one of one or more predefined integration patterns and the selected pattern template is represented as a service pattern template. The regression testing system also selects a test suite and a test environment to be used for testing the service pattern template, wherein the test suite comprises one or more test cases. The method comprises executing each of the one or more test cases in the test suite on the selected test environment, wherein information of the test suite, the test environment and results of the execution of each of the one or more test cases are stored in a test repository. Upon execution, the regression testing system determines a change in the result of the execution of each of the one or more test cases due to at least one of an upgrade and a change in the test environment through regression integration testing based on the information stored in the test repository. Further, the regression testing system performs the regression integration testing on the service pattern template for validating the service pattern template based on the information stored in the test repository.

In the following detailed description of the embodiments of the disclosure, reference is made to the accompanying drawings that form a part hereof, and in which are shown by way of illustration specific embodiments in which the disclosure may be practiced. These embodiments are described in sufficient detail to enable those skilled in the art to practice the disclosure, and it is to be understood that other embodiments may be utilized and that changes may be made without departing from the scope of the present disclosure. The following description is, therefore, not to be taken in a limiting sense.

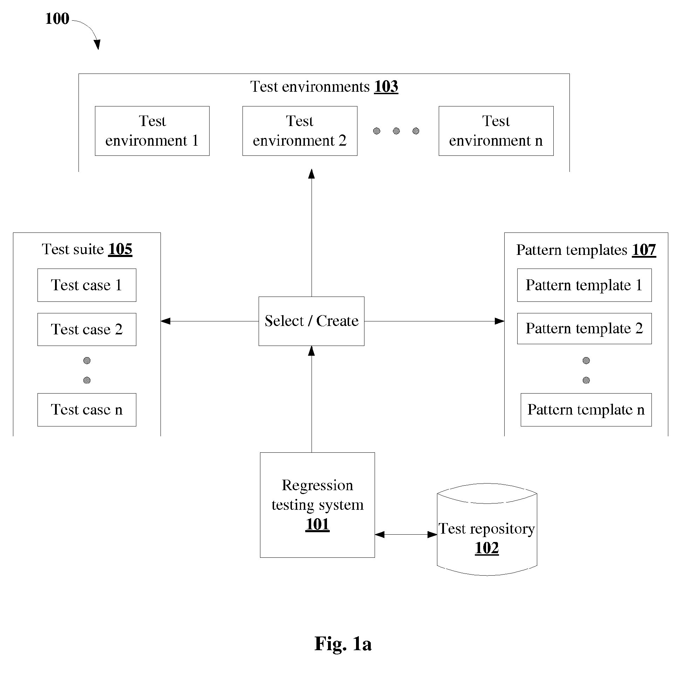

**Fig. 1a** shows an exemplary environment illustrating a method of performing regression integration testing in accordance with some embodiments of the present disclosure.

The environment **100** comprises a regression testing system **101** for performing the regression integration testing. In an embodiment, the environment further comprises one or more pattern templates **107,** one or more test suites **105** and one or more test environments **103** which may be used for performing the regression integration testing. In an embodiment, the one or more pattern templates **107** are test frameworks which may be used for executing one or more test cases in the one or more test suite **105.** The term "pattern" is preferably used herein to refer to a type of testing. The pattern may define a sequence and/or timing of testing individual and/or groups of modules within a software architecture. The term "test environment" is preferably used herein to refer to hardware and/or software used to perform the test. Each of the one or more pattern templates **107** corresponds to one or more predefined integration patters used in an organization. As an example, the one or more predefined integration patterns **119** used in the organization may include 'database to database' and 'file to database' etc. The regression testing system **101** selects one of the one or more pattern templates **107** based on the specific requirements and/or integration architecture used in the organization for performing the regression integration testing. The selected one of the one or more pattern templates **107** may be represented as a service pattern template **107a** which has to be tested by the regression testing system **101.** A test repository **102** associated with the regression testing system **101** may store various information related to the test suite **105** and the one or more test environments **103.** The information stored in the test repository **102** may include, without limiting to, location of the test suite **105,** expected results on executing the one or more test cases in the test suite **105,** test data used for executing the one or more test cases and configuration information of the test environment **103.**

In an embodiment, the regression testing system **101** selects one of the one or more test environments **103** and the corresponding test suite **105** for testing the one or more service pattern templates **107a.** The test suite **105** may comprise one or more test cases which are logically related to each other. The service pattern template **107a** may be tested on the selected test environment **103** by executing the one or more test cases in the selected test suite **105.** The regression testing system may detect any changes in the result of the execution due to any upgrade or change in the test environment **103** through regression testing based on the information stored in the test repository **102.** Further, the regression testing system **101** may update the one or more test cases in the selected test suite **105** for validating the one or more changes in the predefined integration pattern **119.** The validation of the one or more changes in the one or more predefined integration pattern **119** may be achieved by performing regression integration testing of the service pattern template **107a.** The regression integration testing of the service pattern template **107a** is performed by executing the one or more updated test cases and by comparing the results of execution with previous results of executing the one or more test cases, stored in the test repository **102.**

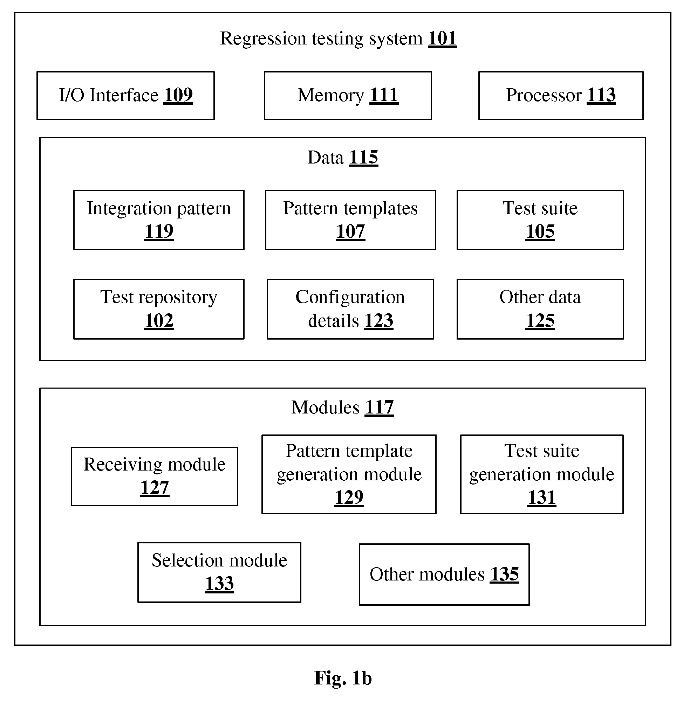

**Fig. 1b** shows a block diagram illustrating a regression testing system in accordance with some embodiments of the present disclosure.

In an implementation, the regression testing system **101** comprises an I/O interface **109,** a memory **111** and a processor **113.** The I/O interface **109** (also referred as user interface hereinafter) may be configured to receive one or more inputs from the user of the regression testing system **101.** As an example, the one or more inputs and one or more data used by the regression testing system **101** may be stored within the memory **111.** In an embodiment, the data **115** may include, without limiting to, the one or more integration patterns **119,** the one or more pattern templates **107,** the test suite **105,** the test repository **102,** one or more configuration details **123** and other data **125.** In one embodiment, the data **115** may be stored in the memory **111** in the form of various data structures. Additionally, the aforementioned data **115** can be organized using data models, such as relational or hierarchical data models. The other data **125** may store data, including temporary data and temporary files, generated by modules for performing the various functions of the regression testing system **101.**

In an embodiment, the one or more integration patterns **119** may be the one or more predefined integration patterns **119** used in an organization based on one or more specific requirements of the organization. The one or more integration patterns **119** define variety of approaches in which the integration of a system may be performed. Some of the examples for the one or more integration patterns **119** may include, but are not limited to, collaboration integration, backbone integration and client/server integration and the similar. In an embodiment, if there exists more than one integration system in an organization, then, there may be one or more integration patterns **119** corresponding to each of such integration systems.

In an embodiment, the one or more pattern templates **107** comprise a consolidated representation of the one or more integration patterns **119** in the organization. Each of the one or more pattern templates **107** may be verified and validated by testing them with the one or more test cases in the test suite **105,** in real-time. As an example, the one or more pattern templates **107** may include, without limitation, 'web-service to database' template, 'file to web-service' template and a 'database to database' template. In an embodiment, the user may also update/change the one or more pattern templates **107** using the user interface. Further, one or more new pattern templates may be generated by the regression testing system **101** when a pattern template **107** corresponding to one of the one or more predefined integration patterns **119** is not available.

In an embodiment, the test suite **105** comprises one or more test cases that are logically related to each other and perform a specific function when executed. The test suite **105** that may be used for validating the one or more pattern templates **107** may be stored in the test repository **102** associated with the regression testing system **101.** In an embodiment, if the user and/or organization wish to perform the integration testing on a new test environment **103** and/or a new version of the integration pattern **119,** then the user may directly generate the new test environment **103** and/or the new version of the integration pattern **119.** Further, the regression testing system **101** validates the newly generated environment and/or integration pattern **119** by running the test suite **105** on the newly generated test environment **103** and/or the new version of the integration pattern 119. In an embodiment, any failures occurring during the execution of the one or more test cases may be considered as a possible error/issue with the newly generated test environment **103** and/or the new version of the integration pattern **119.** Furthermore, the regression testing system **101** may rectify the possible errors/issues associated with the newly generated test environment **103** and/or the new version of the integration pattern **119,** thereby making the test suite **105** to work independent of any test environment **103** and/or the integration pattern **119** being used.

In an embodiment, the test repository **102** may store information related to the test environment **103** and the test suite **105.** The information stored in the test repository **102** may include, without limitation, location for creating the test suite **105,** expected results on executing the one or more test cases in the test suite **105,** test data used for executing the one or more test cases and configuration information of the test environment **103.** In an embodiment, the one or more test cases that are previously stored in the test repository **102** may be used for validating the one or more pattern templates **107** whenever there is a change in the functionality of the one or more integration patterns **119.** The user may use the user interface to select a pattern template **107** and create one or more test cases along with the inputs as variables and send it across to the end system after storing the progress. The stored progress will be the test configuration settings.

In an embodiment, the one or more configuration details **123** may be used for configuring the selected test environment **103** for performing the regression integration testing. The one or more configuration details **123** may also be used for configuring and performing one or more changes on the one or more pattern templates **107** and the test suite **105.** As an example, the one or more configuration details **123** related to the test suite **105** may be classified into two categories, such as, test suite **105** configuration details **123** and test case configuration details **123.** The test suite **105** configuration details **123** may store the sequence of actions to be executed for each of the one or more test cases in the test suite **105** along with a grouping of all the logically related test cases.

In an embodiment, the test case configuration details **123** comprise details of one or more actions taken or to be taken while executing each of the one or more test cases. The test case configuration details **123** may be stored separately for each of the one or more test cases in the test suite **105.** As an example, **Table A** illustrates the one or more actions taken or to be taken on the one or more test cases.

**Table A**

| **Action taken/to be taken** | **Impact of the action** |
|---|---|
| Trigger | Initiate the process and all other actions. |
| Stage | Perform steps needed for sending source data to the processing system. |
| Receive | Perform steps needed for retrieving the data from a target system. |
| Wait/Delay | Provides details of time to wait to get output of executing the test cases. |
| Test | Perform steps needed for comparing the received output of execution with the expected output results already stored in the test repository. |
| Add/Test/Execute/Modify | Tester will be able to create a test suite with one or more test cases, add one or more test cases to the existing test suite or edit the existing test suite or modify the one or more tests. |

As an example, consider an integration system which transforms a source file format to a database record and updates the database accordingly. The integration pattern **119** being used here will be a "File-to-Database" pattern. The series of actions involved herein include running a trigger command (as illustrated in **Table A)** to trigger the transformation, wait for some time for the process to complete, receive the final data from the database and validate the results.

In an embodiment, the one or more configuration details **123,** for configuring the test environment **103** to be used for performing the above transformation may include, without limitation, the database server reference, server name, configuration port address and other details required for establishing the connection and completing the file transfer. The one or more configuration details **123** may also include the location/folder location for storing the other received data and expected output data. Additionally, the one or more configuration details **123,** specific for each of the one or more actions of the test cases, may have the database service provider's details. Further, the user may be allowed to develop and provide custom services for each of the one or more actions of the test cases. This helps the pattern template **107** to be expandable to each of the specific needs of the user.

In an embodiment, the data **115** stored in the memory **111** are processed by the modules **117** of the regression testing system **101.** In an example, the modules **117** may be communicatively coupled to the processor **113** and may be present outside the memory **111** as shown in **Fig. 1b****.** In an embodiment, the modules **117** may also be stored within the memory **111.** As used herein, the term module refers to an application specific integrated circuit (ASIC), an electronic circuit, a processor (shared, dedicated, or group) and memory that execute one or more software or firmware programs, a combinational logic circuit, and/or other suitable components that provide the described functionality.

In one implementation, the modules **117** may include, for example, a receiving module **127,** a pattern template generation module **129,** a test suite generation module **131,** a selection module **133** and other modules **135.** The other modules **135** may be used to perform various miscellaneous functionalities of the regression testing system **101.** It will be appreciated that such aforementioned modules **117** may be represented as a single module or a combination of different modules.

In an embodiment, the receiving module **127** is configured to receive one or more inputs and data from the user of the regression testing system **101** through the user interface of the regression testing system **101.** As an example, the one or more data received by the receiving module **127** may include the one or more configuration details **123.** In an embodiment, the receiving module **127** may also receive user's input for selection of the test environment **103** and the corresponding test suite **105** for regression testing a service pattern template **107a** on the selected test environment **103.**

In an embodiment, the pattern template generation module **129** may generate one or more pattern templates **107** for each of the one or more predefined integrations patterns, based on the requirements of the user of the regression testing system **101.** The pattern template generation module **129** may also be used for generating one or more new pattern templates when a pattern template **107** corresponding to one of the one or more predefined integration patterns **119** is not available in the test repository **102.**

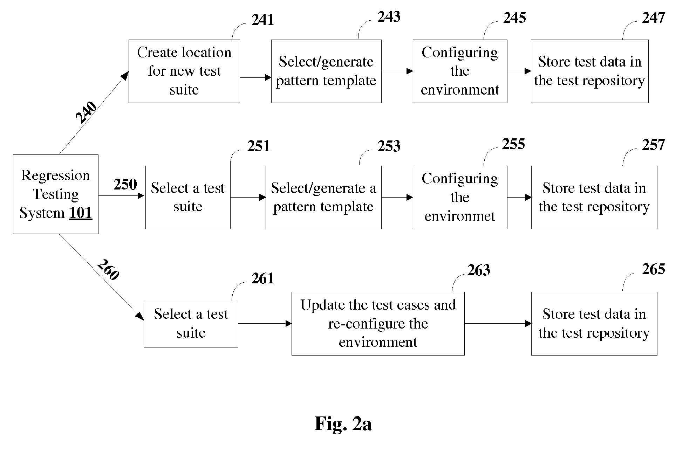

In an embodiment, the test suite generation module **131** may be used to generate the test suite **105** and one or more test cases in the test suite **105.** The test suite **105,** thus generated by the test suite generation module **131,** may be used for testing the service pattern template **107a** on the selected test environment **103.** In an embodiment, the process of generating the test suite **105** and the one or more test cases in the test suite **105** is a multi-fold process as shown in flowchart **Fig. 2a****.**

In an embodiment, the selection module **133** may be used for receiving user's selection on one of the one or more test environments **103** and the corresponding test suites **105.** The selection module **133** may also allow the user of the regression testing system **101** to select one of the one or more pattern templates **107** for performing the regression integration testing, wherein the selected pattern template **107** is a service pattern template **107a.** The user may use the selection module **133** to change and/or reselect a test environment **103** or test suite **105** at any stage of performing the regression integration testing.

In an embodiment, the selection module **133** may use the user interface for receiving one or more user selections on the one or more test environments **103** and the corresponding one or more configuration details **123,** the test suites **105** and the one or more pattern templates **107.** As an example, the user interface may display a list of the one or more pattern templates **107** and the one or more test environments **103** which have been currently configured in the regression testing system **101.** The user may select one of the one or more test environments **103** and the service pattern template **107a** from the displayed list for performing the regression integration testing. In an embodiment, the user may use the user interface for specifying a location for creating a new test suite **105** when the required test suite **105** does not exist in the test repository **102.**

**Fig. 2a** illustrates the flowchart showing a method for generating a test suite **105.** The series of actions indicated from block **240** illustrate the method of generating the test suite **105** for the first time when a test suite **105** required by the user of the regression testing system **101** is not available in the test repository **102.** At block **241,** the user of the regression testing system **101** provides/selects a location and/or folder location for creating the test suite **105.** As an example, the user may use the user interface for specifying the location and/or folder location for creating the test suite **105.** At block **243,** the user may select one of the one or more pattern templates **107** to be used for testing. As an example, the user may select one of the one or more pattern templates **107** from a list of existing pattern templates **107,** displayed on the user interface. The pattern template selected from the one or more pattern templates **107** is the service pattern template **107a.** Alternatively, the user may also create a pattern template **107** if one of the pattern template **107** required by the user does not exist in the test repository **102** of the regression testing system **101.** At block **245,** the user may select and configure the test environment **103** required for performing the regression integration testing of the service pattern template **107a.** In an embodiment, the regression testing system **101** may perform configuration of the test environment **103** based on the one or more configuration details **123** received from the user. At block **247,** the user may store the one or more test data related to the test suite **105** and the one or more test cases in the test suite **105** in the test repository **102.** As an example, the test data may include one or more expected results on execution of the generated test suite **105.** In an embodiment, the one or more test data may be used for validating the service pattern template **107a** while performing the regression integration testing of the service pattern template **107a.** In an embodiment, the one or more test data may be stored in a separate folder at the location and/or folder location used for generating the test suite **105.** Also, the user may override and/or update the one or more test data at any time or on any test environment **103** for enabling the regression testing system **101** to perform regression testing on each of the one or more test environments **103** required by the user.

In another embodiment, the test suite **105** required for performing the regression testing may pre-exist in the test repository **102,** thereby eliminating the need for generating the new test suite **105.** In such cases, the user of the regression testing system **101** may directly select the required test suite **105** and may add one or more additional test cases into the existing test suite **105,** as indicated by the series of actions from block **250** of **Fig.2a****.** At block **251,** the user may select one of the one or more test suites **105** existing in the test repository **102.** As an example, the regression testing system **101** may display a list of one or more test suites **105** existing in the test repository **102,** on the user interface, thereby allowing the user to select the required test suite. At block **253,** the user may select one of the one or more pattern templates **107** from the one or more pattern templates **107** existing in the test repository **102.** Alternatively, the user may also create a pattern template **107** if one of the pattern template **107** required by the user does not exist in the test repository **102** of the regression testing system **101.** The pattern template **107,** thus selected by the user may be coupled to the chosen test suite **105** for performing the regression integration testing of the service pattern template **107a.** At block **255,** the user may select and configure the test environment **103** required for performing the regression integration testing of the service pattern template **107a.** At block **257,** similar to the actions performed at block **247,** the user may store the one or more test data related to the test suite **105** and the one or more test cases in the test suite **105** in the test repository **102.**

In another embodiment, the user of the regression testing system **101** may update/change the test suite **105** and the one or more test cases in the test suite **105** when there is a change in the functionality of the one or more integration patterns **119** used for performing the regression testing. This scenario may be indicated using the series of actions from block **260** of **Fig. 2a****.** At block **261,** the user may select the test suite **105** required for performing the regression integration testing, as explained earlier at block **251.** At block **263,** the user may select and update the one or more specific test cases that may have been changed during the update in the respective integration pattern **119.** Alternatively, the user may update each of the one or more test cases in the test repository **102** whenever required. Further, upon updating the one or more test cases, the user may re-configure the selected test environment **103** for performing the regression integration testing of the service pattern template **107a** corresponding to the updated integration pattern **119.** At block **265,** the user may store the one or more test data related to the test suite **105** and the one or more test cases in the test suite **105** in the test repository **102.** The one or more previous versions of the test data may be replaced with a newer version of the test data upon updating the one or more test cases in the test suite **105.**

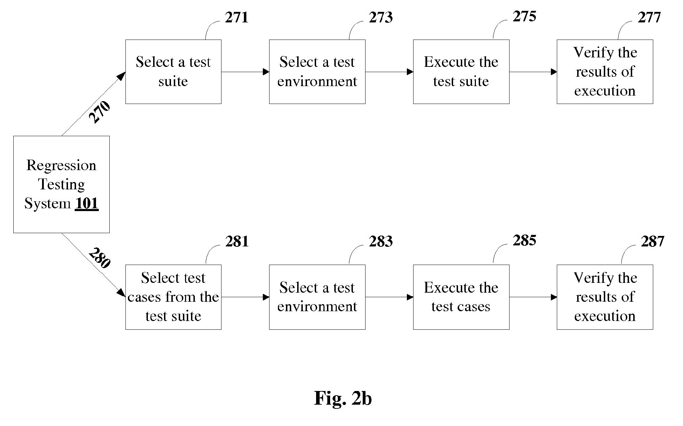

**Fig. 2b** illustrates a flowchart showing a method of executing test suites **105** and test cases in accordance with some exemplary embodiments of the present disclosure. At block **271,** the user may select a required one of the one or more test suites **105** from the list of test suites **105** displayed on the user interface. At block **273,** the user may select a test environment **103** from the list of already existing test environments **103** provided on the user interface. At block **275,** the regression testing system **101** executes the test suite **105** and each of the one or more test cases in the test suite **105.** At block **277,** the regression testing system **101** verifies the results of execution by comparing the results of executing the test suite **105** with the one or more expected results of execution, stored in the test repository **102.** Further, the results/information of executing the test suite **105** may be stored on an event log file in the test repository **102** for performing the regression testing in the future.

In another embodiment, the regression testing system **101** may execute the one or more specific test cases within the selected test suite **105** on the selected environment, as shown from block **280** of **Fig. 2b****,** whenever there is a change in functionality of the one or more integration patterns **119.** At block **281,** the user may select one or more test cases from the pre-selected test suite **105.** At block **283,** the user may select a test environment **103** from the list of already existing test environments **103** provided on the user interface. At block **275,** the regression testing system **101** executes the one or more selected test cases. At block **277,** the regression testing system **101** verifies the results of execution by comparing the one or more results of executing the one or more selected test cases with the expected results of execution, which is stored in the test repository **102.** Further, the results and/or information of executing the one or more selected test cases may be stored on an event log file in the test repository **102** for performing the regression testing in the future.

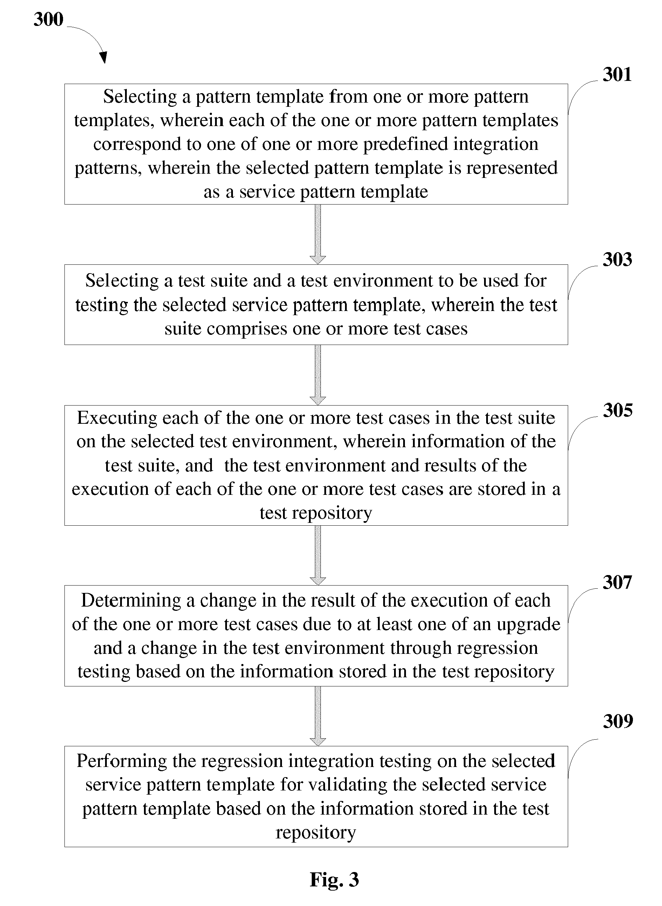

**Fig.3** illustrates a flowchart showing a method of performing regression integration testing in accordance with some embodiments of the present disclosure.

As illustrated in **Fig.3****,** the method **300** comprises one or more blocks for performing regression integration testing using a regression testing system **101.** The method **300** may be described in the general context of computer executable instructions. Generally, computer executable instructions can include routines, programs, objects, components, data structures, procedures, modules, and functions, which perform particular functions or implement particular abstract data types.

The order in which the method **300** is described is not intended to be construed as a limitation, and any number of the described method blocks can be combined in any order to implement the method. Additionally, individual blocks may be deleted from the methods without departing from scope of the subject matter described herein. Furthermore, the method can be implemented in any suitable hardware, software, firmware, or combination thereof.

At **block 301,** a regression testing system **101** selects a pattern template **107** from one or more pattern templates **107,** wherein the selected pattern template **107** is represented as a service pattern template **107a.** Each of the one or more pattern templates **107** correspond to one of one or more predefined integration patterns **119.** In an embodiment, the regression testing system **101** uses the pattern template generation module **129** for generating one or more new pattern templates when a pattern template **107** corresponding to one of the one or more predefined integration patterns **119** is unavailable for selection by the user.

At **block 303,** the regression testing system **101** selects a test suite **105** and a test environment **103** to be used for testing the service pattern template **107a.** The test suite **105** comprises one or more test cases. In an embodiment, the regression testing system **101** may receive one or more configuration details **123** from the user through the receiving module **127** of the regression testing system **101** for configuring the selected test environment **103** before executing the one or more test cases on the selected test environment **103.** In an embodiment, the regression testing system **101** uses the pattern template generation module **129** for generating a test suite and a test environment when the test suite **105** and the test environment **103** to be used for testing the service pattern template **107a** is unavailable for selection by the user.

At **block 305,** the regression testing system **101** executes each of the one or more test cases in the test suite **105** on the selected test environment **103,** wherein information of the test suite **105,** the test environment **103** and results of the execution of each of the one or more test cases are stored in a test repository **102.** In an embodiment, the information stored in the test repository **102** may further comprise at least one of location for creating the test suite **105, ,** test data used for executing the one or more test cases and configuration information of the test environment **103.**

At **block 307,** determines a change in the result of the execution of each of the one or more test cases due to at least one of an upgrade and a change in the test environment **103** through regression testing based on the information stored in the test repository **102.** In an embodiment, the regression testing system **101** may also update the one or more test cases in the test suite **105** upon determining a change in functionality of the one or more predefined integration patterns **119.** The one or more updated test cases facilitate in performing the regression integration testing on the service pattern template **107a** in future.

At **block 309,** the regression testing system **101** performs the regression integration testing on the service pattern template **107a** for validating the service pattern template **107a** based on the information stored in the test repository **102.**

### Computer System

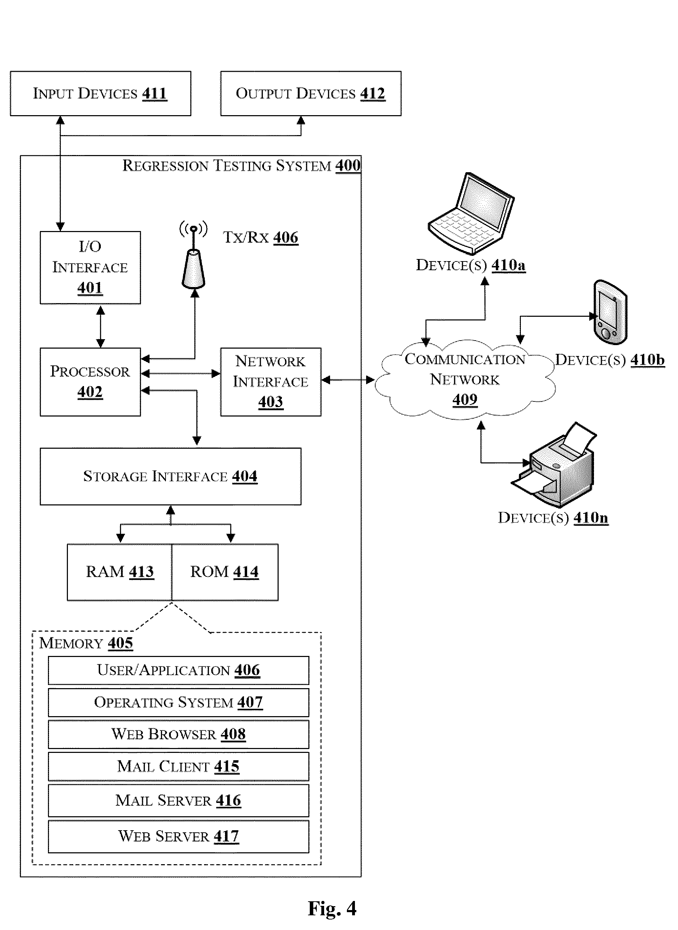

**Fig.4** illustrates a block diagram of an exemplary computer system for implementing embodiments consistent with the present invention. In an embodiment, the regression testing system **400** is used to perform regression integration testing. The regression testing system **400** may comprise a central processing unit ("CPU" or "processor") **402.** The processor **402** may comprise at least one data processor for executing program components for executing user-or system-generated business processes. A user may include a person, a person using a device such as such as those included in this invention, or such a device itself. The processor **402** may include specialized processing units such as integrated system (bus) controllers, memory management control units, floating point units, graphics processing units, digital signal processing units, etc.

The processor **402** may be disposed in communication with one or more input/output (I/O) devices **(411** and **412)** via I/O interface **401.** The I/O interface **401** may employ communication protocols/methods such as, without limitation, audio, analog, digital, stereo, IEEE-1394, serial bus, Universal Serial Bus (USB), infrared, PS/2, BNC, coaxial, component, composite, Digital Visual Interface (DVI), high-definition multimedia interface (HDMI), Radio Frequency (RF) antennas, S-Video, Video Graphics Array (VGA), IEEE 802.n /b/g/n/x, Bluetooth, cellular (e.g., Code-Division Multiple Access (CDMA), High-Speed Packet Access (HSPA+), Global System For Mobile Communications (GSM), Long-Term Evolution (LTE), WiMax, or the like), etc.

Using the I/O interface **401,** the computer system **400** may communicate with one or more I/O devices **(411** and **412).**

In some embodiments, the processor **402** may be disposed in communication with a communication network **409** via a network interface **403.** The network interface **403** may communicate with the communication network **409.** The network interface **403** may employ connection protocols including, without limitation, direct connect, Ethernet (e.g., twisted pair 10/100/1000 Base T), Transmission Control Protocol/Internet Protocol (TCP/IP), token ring, IEEE 802.11 a/b/g/n/x, etc. Using the network interface **403** and the communication network **409,** the computer system **400** may communicate with one or more user devices **410 (a,..,n).** The communication network **409** can be implemented as one of the different types of networks, such as intranet or Local Area Network (LAN) and such within the organization. The communication network **409** may either be a dedicated network or a shared network, which represents an association of the different types of networks that use a variety of protocols, for example, Hypertext Transfer Protocol (HTTP), Transmission Control Protocol/Internet Protocol (TCP/IP), Wireless Application Protocol (WAP), etc., to communicate with each other. Further, the communication network **409** may include a variety of network devices, including routers, bridges, servers, computing devices, storage devices, etc. The one or more user devices **410 (a,...,n)** may include, without limitation, personal computer(s), mobile devices such as cellular telephones, smartphones, tablet computers, eBook readers, laptop computers, notebooks, gaming consoles, or the like.

In some embodiments, the processor **402** may be disposed in communication with a memory **405** (e.g., RAM **413,** ROM **414,** etc.) via a storage interface **404.** The storage interface **404** may connect to memory **405** including, without limitation, memory drives, removable disc drives, etc., employing connection protocols such as Serial Advanced Technology Attachment (SATA), Integrated Drive Electronics (IDE), IEEE-1394, Universal Serial Bus (USB), fiber channel, Small Computer Systems Interface (SCSI), etc. The memory drives may further include a drum, magnetic disc drive, magnetooptical drive, optical drive, Redundant Array of Independent Discs (RAID), solid-state memory devices, solid-state drives, etc.

The memory **405** may store a collection of program or database components, including, without limitation, user interface application **406,** an operating system **407,** web server **408** etc. In some embodiments, computer system **400** may store user/application data **406,** such as the data, variables, records, etc. as described in this invention. Such databases may be implemented as fault-tolerant, relational, scalable, secure databases such as Oracle or Sybase.

The operating system **407** may facilitate resource management and operation of the computer system **400.** Examples of operating systems include, without limitation, Apple Macintosh OS X, UNIX, Unix-like system distributions (e.g., Berkeley Software Distribution (BSD), FreeBSD etc.), Linux distributions (e.g., Red Hat, Ubuntu, K-Ubuntu, etc.), International Business Machines (IBM) OS/2, Microsoft Windows (XP, Vista/7/8, etc.), Apple iOS, Google Android, Blackberry Operating System (OS), or the like. User interface **406** may facilitate display, execution, interaction, manipulation, or operation of program components through textual or graphical facilities. For example, user interfaces may provide computer interaction interface elements on a display system operatively connected to the computer system **400,** such as cursors, icons, check boxes, menus, windows, widgets, etc. Graphical User Interfaces (GUIs) may be employed, including, without limitation, Apple Macintosh operating systems' Aqua, IBM OS/2, Microsoft Windows (e.g., Aero, Metro, etc.), Unix X-Windows, web interface libraries (e.g., ActiveX, Java, JavaScript, AJAX, HTML, Adobe Flash, etc.), or the like.

In some embodiments, the computer system **400** may implement a web browser **408** stored program component. The web browser may be a hypertext viewing application, such as Microsoft Internet Explorer, Google Chrome, Mozilla Firefox, Apple Safari, etc. Secure web browsing may be provided using Secure Hypertext Transport Protocol (HTTPS) secure sockets layer (SSL), Transport Layer Security (TLS), etc. Web browsers may utilize facilities such as AJAX, DHTML, Adobe Flash, JavaScript, Java, Application Programming Interfaces (APIs), etc. In some embodiments, the computer system **400** may implement a mail server stored program component. The mail server may be an Internet mail server such as Microsoft Exchange, or the like. The mail server may utilize facilities such as Active Server Pages (ASP), ActiveX, American National Standards Institute (ANSI) C++/C#, Microsoft .NET, CGI scripts, Java, JavaScript, PERL, PHP, Python, WebObjects, etc. The mail server may utilize communication protocols such as Internet Message Access Protocol (IMAP), Messaging Application Programming Interface (MAPI), Microsoft Exchange, Post Office Protocol (POP), Simple Mail Transfer Protocol (SMTP), or the like. In some embodiments, the computer system **400** may implement a mail client stored program component. The mail client may be a mail viewing application, such as Apple Mail, Microsoft Entourage, Microsoft Outlook, Mozilla Thunderbird, etc.

Furthermore, one or more computer-readable storage media may be utilized in implementing embodiments consistent with the present invention. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., non-transitory. Examples include Random Access Memory (RAM), Read-Only Memory (ROM), volatile memory, nonvolatile memory, hard drives, Compact Disc (CD) ROMs, Digital Video Disc (DVDs), flash drives, disks, and any other known physical storage media.
Advantages of the embodiment of the present disclosure are described below.

In an embodiment, the present disclosure provides a method of performing regression integration testing based on pattern of the integration being performed.

In an embodiment, the present disclosure provides a user, the flexibility to generate one or more environment independent pattern templates for performing regression integration testing.

In an embodiment, the present disclosure provides a "create once and run anytime on any environment configuration" way of performing regression integration testing.

In an embodiment, the present disclosure reduces cost of performing integration testing by retaining one or more updated test cases and test suites for performing regression testing in future.

The terms "an embodiment", "embodiment", "embodiments", "the embodiment", "the embodiments", "one or more embodiments", "some embodiments", and "one embodiment" mean "one or more (but not all) embodiments of the invention(s)" unless expressly specified otherwise.

The terms "including", "comprising", "having" and variations thereof mean "including but not limited to", unless expressly specified otherwise.

The enumerated listing of items does not imply that any or all of the items are mutually exclusive, unless expressly specified otherwise.

The terms "a", "an" and "the" mean "one or more", unless expressly specified otherwise.

A description of an embodiment with several components in communication with each other does not imply that all such components are required. On the contrary a variety of optional components are described to illustrate the wide variety of possible embodiments of the invention.

When a single device or article is described herein, it will be readily apparent that more than one device/article (whether or not they cooperate) may be used in place of a single device/article. Similarly, where more than one device or article is described herein (whether or not they cooperate), it will be readily apparent that a single device/article may be used in place of the more than one device or article or a different number of devices/articles may be used instead of the shown number of devices or programs. The functionality and/or the features of a device may be alternatively embodied by one or more other devices which are not explicitly described as having such functionality/features. Thus, other embodiments of the invention need not include the device itself.

Finally, the language used in the specification has been principally selected for readability and instructional purposes, and it may not have been selected to delineate or circumscribe the inventive subject matter. It is therefore intended that the scope of the invention be limited not by this detailed description, but rather by any claims that issue on an application based here on. Accordingly, the embodiments of the present invention are intended to be illustrative, but not limiting, of the scope of the invention, which is set forth in the following claims.

While various aspects and embodiments have been disclosed herein, other aspects and embodiments will be apparent to those skilled in the art. The various aspects and embodiments disclosed herein are for purposes of illustration and are not intended to be limiting, with the true scope being indicated by the following claims.

## Claims

1. A computer-implemented method of performing regression integration testing, the method comprising:
selecting a pattern template from one or more pattern templates, wherein each of the one or more pattern templates correspond to one of one or more predefined integration patterns, wherein the selected pattern template is represented as a service pattern template;
selecting a test suite and a test environment to be used for testing the service pattern template, wherein the test suite comprises one or more test cases;
executing each of the one or more test cases in the test suite on the selected test environment, wherein information of the test suite, the test environment and results of the execution of each of the one or more test cases are stored in a test repository;
determining a change in the result of the execution of each of the one or more test cases due to at least one of an upgrade and a change in the test environment through regression testing based on the information stored in the test repository; and
performing the regression integration testing on the service pattern template for validating the service pattern template based on the information stored in the test repository.

2. The method as claimed in claim 1 further comprising generating one or more new pattern templates when a pattern template corresponding to one of the one or more predefined integration patterns is unavailable for selection.

3. The method as claimed in claim 1 or claim 2 further comprising generating a test suite and a test environment when the test suite and the test environment to be used for testing the service pattern template is unavailable for selection.

4. The method as claimed in any preceding claim further comprising receiving one or more configuration details from a user through a User Interface of the regression testing system for configuring the selected test environment before executing the one or more test cases on the selected test environment.

5. The method as claimed in any preceding claim, wherein the information stored in the test repository further comprises at least one of a location for creating the test suite, test data used for executing the one or more test cases and configuration information of the test environment.

6. The method as claimed in any preceding claim further comprising updating the one or more test cases in the test suite upon determining a change in functionality of the one or more predefined integration patterns.

7. The method as claimed in claim 6, wherein the one or more updated test cases facilitate in performing the regression integration testing on the service pattern template in future.

8. A regression testing system for performing regression integration testing, the regression testing system comprising:
a processor; and
a memory communicatively coupled to the processor, wherein the memory stores processor-executable instructions, which, on execution, causes the processor to:
select a pattern template from one or more pattern templates, wherein each of the one or more pattern templates correspond to one of one or more predefined integration patterns, wherein the selected pattern template is represented as a service pattern template;
select a test suite and a test environment to be used for testing the service pattern template, wherein the test suite comprises one or more test cases;
execute each of the one or more test cases in the test suite on the selected test environment, wherein information of the test suite, the test environment and results of the execution of each of the one or more test cases are stored in a test repository;
determine a change in the result of the execution of each of the one or more test cases due to at least one of an upgrade and a change in the test environment through regression testing based on the information stored in the test repository; and
perform the regression integration testing on the service pattern template for validating the service pattern template based on the information stored in the test repository.

9. The system as claimed in claim 8, wherein the instructions cause the processor to generate one or more new pattern templates when a pattern template corresponding to one of the one or more predefined integration patterns is unavailable for selection.

10. The system as claimed in claim 8 or claim 9, wherein the instructions cause the processor to generate a test suite and a test environment when the test suite and the test environment to be used for testing the service pattern template is unavailable for selection.

11. The system as claimed in any of claims 8 to 10, wherein a User Interface configured in the regression testing system is used for receiving one or more configuration details from a user for configuring the selected test environment before executing the one or more test cases on the selected test environment.

12. The system as claimed in any of claims 8 to 11, wherein the information stored in the test repository further comprises at least one of location for creating the test suite, test data used for executing the one or more test cases and configuration information of the test environment.

13. The system as claimed in any of claims 8 to 12, wherein the instructions further cause the processor to update the one or more test cases in the test suite upon determining a change in functionality of the one or more predefined integration patterns.

14. The system as claimed in claim 13, wherein the one or more updated test cases facilitate to perform the regression integration testing on the service pattern template in future.

15. A non-transitory computer readable medium including instructions stored thereon that when processed by at least one processor cause a regression testing system to perform the method of any of claims 1 to 7.
